**Europäisches Patentamt**

**European Patent Office**

**Office européen des brevets**

(19)

(11) Veröffentlichungsnummer : **0 360 236 B1**

(12)

# EUROPÄISCHE PATENTSCHRIFT

(45) Veröffentlichungstag der Patentschrift :
28.10.92 Patentblatt 92/44

(51) Int. Cl.⁵ : **C09C 1/60,** C09C 3/04,
B01J 2/12

(21) Anmeldenummer : **89117360.1**

(22) Anmeldetag : **20.09.89**

(54) **Verfahren zum Trockenverperlen von Russ und Vorrichtungen zur Durchführung einer Version des Verfahrens.**

(30) Priorität : 23.09.88 DE 3832404
11.03.89 DE 3908022

(43) Veröffentlichungstag der Anmeldung :
28.03.90 Patentblatt 90/13

(45) Bekanntmachung des Hinweises auf die
Patenterteilung :
28.10.92 Patentblatt 92/44

(84) Benannte Vertragsstaaten :
DE ES FR GB IT NL SE

(56) Entgegenhaltungen :
CH-A- 513 033
DE-B- 1 129 459

(73) Patentinhaber : **Degussa Aktiengesellschaft
Weissfrauenstrasse 9
W-6000 Frankfurt am Main 1 (DE)**

(72) Erfinder : **Vogel, Karl, Dr.
Am Mittelbach 9
W-8755 Alzenau-Michelbach (DE)**

EP 0 360 236 B1

## Beschreibung

Die Erfindung betrifft ein Verfahren zum Trockenverperlen von Pulverruß unter gezielter Beeinflussung der Perlqualität und Erhöhung des Durchsatzes einer gegebenen Verperleinrichtung durch Vorverdichten des zu verperlenden Ausgangsrußes und Verperlung durch einen Rollvorgang sowie zwei neue Vorrichtungen, die sich zur Durchführung einer Version dieses Verfahrens eignen.

Der in den verschiedenen Produktionseinrichtungen erzeugte Ruß fällt als feinverteiltes pulvriges und stark staubendes Material an. Zwecks einfacherer und kostengünstigerer Handhabung wird ein Großteil der erzeugten Ruße in freifließende Pellets überführt.

Einerseits ist die Granulierung auf feuchtem Wege bekannt, wobei dem Ruß in geeigneten Vorrichtungen eine bestimmte Menge Flüssigkeit zugesetzt wird und durch erzwungene Bewegungen dieses Gemisches Granulierung erfolgt, andererseits ist die auf nur ganz spezielle Ruße anwendbare Trockengranulierung bekannt, wobei der Ruß durch mehr oder minder lang andauernde Abrollbewegungen in Granulatform überführt wird.

Obwohl mittels der Naßgranulierung nahezu die gesamte Rußpalette in Granulatform überführt werden kann und gleichsam die Schütteigenschaften, Festigkeiten und Fließeigenschaften der erzeugten Pellets über weite Bereiche variierbar sind, sprechen gewichtige Punkte gegen die Naßgranulierung.

Das Anmischen des Rußes mit einem flüssigen Pelletiermedium bedarf eines Mindesteintrages an Energie, um den Pelletiervorgang ablaufen zu lassen. Eine besonders weiche Pelletierung - oft für bestimmte Anwendungsgebiete erwünscht - kann daher mit der Naßgranulierung nur äußerst unbefriedigend durchgeführt werden. Der Zusatz von bestimmten Bindemitteln beim Naßgranulierverfahren macht sich nicht selten störend bei der Weiterverarbeitung bemerkbar. Letztendlich ist der hohe Energieeinsatz bei der Naßpelletierung für das Wiederverdampfen des vorher zugesetzten flüssigen Pelletiermediums relativ unwirtschaftlich.

Den bisher angewandten Trockenpelletiermethoden konnte nur eine beschränkte Zahl von Rußen unterworfen werden, während sich der weitaus größere Teil der Ruße dem Trockenpelletierverfahren widersetzte.

Bestimmte Pelletparameter, wie z. B. Schüttdichte, Stampfdichte, Einzelperlhärte, Perlgröße und die Pelletierkapazität vorgegebener Einrichtungen, waren bisher weitgehendst produktspezifisch vorgegeben und nur in äußerst engen Grenzen variierbar. Eine gezielte Einstellung der obengenannten Parameter war weitgehendst ausgeschlossen.

Die bekannten Verfahren waren bezüglich der Beeinflussung der Perlqualität nicht genügend flexibel. Sie legten die Verperlkapazität fest, eine Erhöhung dieser war aber nicht möglich.

Aus der DE-AS 10 51 815 ist ein Verfahren zum Trockengranulieren von Pulvern ohne Zugabe von Bindemittel bekannt, welches der Beeinflussung der Granulatqualität (gewünschte Korngröße, Granulathärte) dient. Das genannte Verfahren verdichtet das Pigment zu einem schülpenartigen Zwischenprodukt in einer Preßkompaktierung. Das Zwischenprodukt muß anschließend zerkleinert und gesiebt werden, ehe es einer üblichen Aufbaugranulierung zugeführt wird. Die Funktion des Verfahrens besteht also in einer mechanischen Verpressung, einer Zerkleinerung des Preßguts, einem Siebvorgang und der eigentlichen Granulierung. Letztere erfolgt somit an hochverdichteten Keimen aus der Siebung. Die Folge ist, daß Kern und Schale des Endprodukts unterschiedliche Verdichtung aufweisen, d. h. es liegt eine inhomogene Dichteverteilung über den Querschnitt vor.

Ausgangsstoffe wie Ruß mit einer charakteristischen Teilchenstruktur können ohne Änderung dieser nicht nach dem genannten Verfahren verperlt werden, da durch die starke mechanische Druckeinwirkung bei der Vorverdichtung ein Strukturabbau mit schwerwiegenden Konsequenzen hinsichtlich bestimmter, für die Weiterverarbeitung wichtiger anwendungstechnischer Eigenschaften eintritt.

In der US-PS 2 883 274 ist eine Vorrichtung und ein Verfahren zum Pelletisieren und Verdichten von Ruß beschrieben. Die Vorrichtung besteht aus einer drehbaren zylindrischen, horizontal angeordneten Trommel, die durch ein senkrechtes, an der Trommelinnenwand befestigtes Wehr in einen Pelletierraum und einen Verdichtungsraum abgeteilt wird.

Zur Beförderung der im Pelletierraum durch Agglomeration gebildeten Pellets über das Wehr in den Verdichtungsraum dienen am Wehr in Höhe von Überlauföffnungen befestigte schaufelartige Mittel. Sie stehen mit den Überlauföffnungen in Verbindung, schöpfen während der Trommelrotation kleine Mengen der Pellets von der Oberfläche des Pelletierbetts ab, transportieren diese auf eine bestimmte Überlaufhöhe und entleeren sie bei Erreichen derselben über die Überlauföffnungen in freiem Fall in den Verdichtungsraum, wo sie durch Rotieren weiterverdichtet und schließlich am Trommelende ausgetragen werden.

Die in der genannten Patentschrift beschriebene Erfindung schaltet also einer Aufbaugranulation eine Verdichtungsstufe nach, um mechanisch relativ stark verdichtete Pellets zu erzeugen.

Die Erfindung geht einen anderen Weg. Es liegt ihr die Aufgabe zugrunde, ein Verfahren zum Trockenverperlen von Pulverruß zu schaffen, mit welchem die Perlqualität in gewünschter Weise beeinflußt, der Durchsatz einer gegebenen Granuliereinrichtung erheblich erhöht und ein Strukturabbau vermieden werden

2

kann.

Diese Aufgabe wird erfindungsgemäß gelöst durch ein Verfahren zum Trockenverperlen von Pulverruß nach dem Prinzip der Aufbaugranulierung unter Beeinflussung der Perlqualität und Erhöhung des Durchsatzes einer Verperleinrichtung durch Vorverdichten des zu perlenden Ausgangsrußes und Verperlung durch einen Rollvorgang.

Das Verfahren ist dadurch gekennzeichnet, daß man den Ausgangsruß unter Erhaltung seiner Pulverform durch Absaugung mittels vakuumbeaufschlagter rotierender oder stationärer Filterflächen auf ein Schüttgewicht von 80 - 300 g/l, vorzugsweise 100 - 250, insbesondere 130 - 220 g/l, vorverdichtet.

Das Verfahren gemäß der Erfindung nimmt zwar ebenfalls eine Vorverdichtung des pulverförmigen Ausgangsmaterials vor. Diese zielt jedoch darauf ab, die Pulverform des vorzuverdichtenden Materials soweit zu erhalten, daß das Material bei der Entfernung von der Filterfläche keinerlei hochverdichtete Keimgranulate enthält. Gelöst wird dieses Problem dadurch, daß zur Vorverdichtung nur Vakuumwirkung aber keine mechanischen Preßkräfte ausgeübt werden. Die ausschließliche Verwendung von Vakuumfiltereinrichtungen sichert eine schonende Vorverdichtung des pulverförmigen Ausgangsrußes unter Aufrechterhaltung der ursprünglichen Rußstruktur.

Als Filterflächen, an denen die äußerst schonende Vorverdichtung durch Absaugung erfolgen kann, eignet sich besonders die Vakuumfilterwalze. Eine bevorzugte Ausführungsform sieht daher vor, daß man die Vorverdichtung mittels Vakuumfilterwalze vornimmt. Es sind Einrichtungen verwendbar, welche mit einer oder mehreren Vakuumfilterwalzen arbeiten (s. DE-PS 865 273, DE-PS 895 286).

Bei einer Vorverdichtung, z. B. mittels einer mit 2 gegenläufigen Vakuumfilterwalzen arbeitenden Einrichtung wird der Ruß an den dem Walzenspalt abgekehrten Walzenflächen aufgegeben. Durch das in den Walzen herrschende Vakuum wird der Ruß auf die Walzenoberflächen angesogen und sehr schonend entlüftet. Der Walzenspalt muß so gewählt werden, daß keine Berührung zwischen dem auf beiden Walzen befindlichen Ruß zustande kommt. Der für die gewünschten Perleigenschaften erforderliche Verdichtungsgrad kann beeinfluß werden durch die Höhe des Vakuums, die Drehgeschwindigkeit der Walze und die zugeführte Rußmenge. Wesentlich ist, das Ausgangsmaterial auf ein Schüttgewicht von 80 - 300, vorzugsweise 100 - 250, insbesondere 130 - 220 g/l, vorzuverdichten.

Das so gezielt vorbehandelte Produkt wird mittels bekannter Dosiergeräte in die unterschiedlichsten Granuliereinrichtungen eingegeben. Für die Granulierung können alle an sich bekannten Granuliervorrichtungen und Apparate eingesetzt werden, doch hat sich im Rahmen der Erfindung eine Verperlung in einer rotierenden Perltrommel oder auf einem Tellergranulator als vorteilhaft erwiesen.

Bei der mit unterschiedlichen Drehzahlen und Wehrhöhen rotierenden Perltrommel wird der vorverdichtete Ruß mittels bekannter Dosiergeräte an der Stirnseite eingegeben. Bei zusätzlicher Eingabe von vorgeperltem Impfgut befindet sich z. B. der Einlauf des vorverdichteten Rußes in die Trommel ca. 1 m hinter dem Einlauf des Impfgutes in Stromrichtung. Durch den kontinuierlichen Abrolleffekt des vorverdichteten Pulverrußes in der Trommel kommt es zur Pelletbildung.

Bei dem mit unterschiedlicher Drehzahl, Wehrhöhe und Anstellwinkel rotierenden Tellergranulator wird der vorverdichtete Ruß mittels bekannter Dosiergeräte in Höhe des äußeren Randes der 2.00-Uhr-Position kontinuierlich eingetragen. Durch dauernde Abrollbewegungen erfolgt die Perlung des Produktes. Entsprechend der gewünschten Perleigenschaften kann sowohl auf Impfgut verzichtet wie auch Impfgut zugeführt werden.

Eine spezifische Variante des erfindungsgemäßen Verfahrens sieht vor, daß man das Ausgangsmaterial während der Verperlung in einer Perltrommel durch Anlegen von Unterdruck an den als Filterfläche ausgebildeten Trommelmantel oder an stationär in der Trommel angeordnete Filterelemente vorverdichtet.

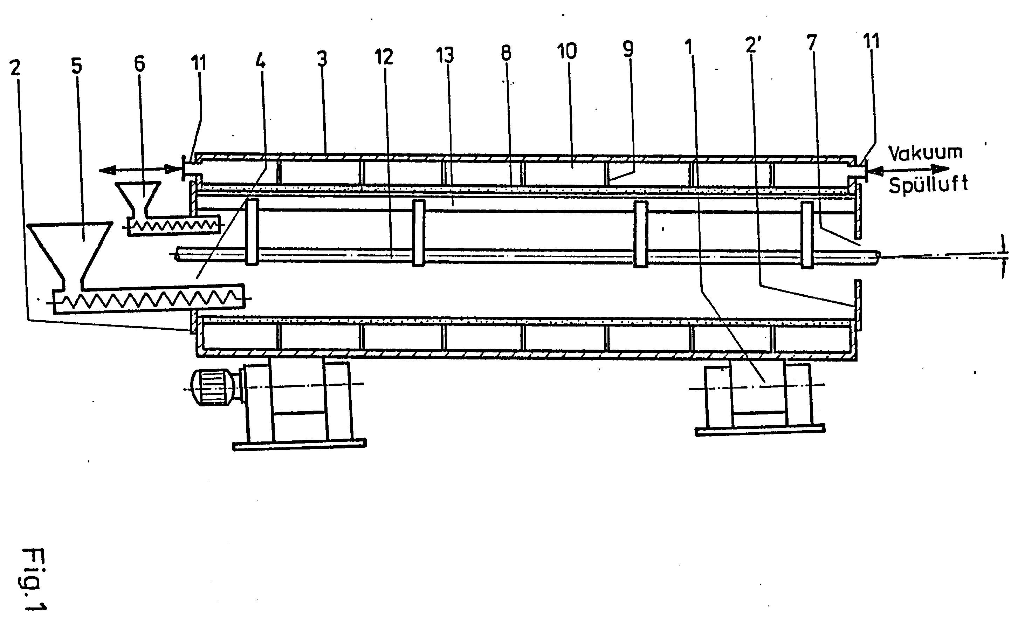

Es wurde gefunden, daß sich hierzu in besonderem Maße eine in einem mit Abstandshalteringen ausgerüsteten Stahlrohr eingeschobene Sintermetallwalze eignet. Durch das Anlegen eines Vakuums zwischen Stahlrohr und Sintermetallwalze wird das im Inneren der mit einem Abstreifer versehenen Sintermetallwalze befindliche Material gezielt verdichtet und geperlt, wenn man diese Vorrichtung in Drehbewegungen versetzt. Diese Vorrichtung, von der eine bevorzugte Ausführungsform in Figur 1 der anliegenden Zeichnung gezeigt ist, besteht zunächst aus an sich bekannten Elementen, nämlich aus einer mit leichter Neigung zur Horizontalen aufgestellten und mit ihrem Mantel auf angetriebenen Rollen 1 gelagerten, an beiden Stirnseiten mit einem ringförmigen Wehr 2,2' versehenen Trommel 3, in deren etwas höherliegendem stirnseitigen Einlauf 4 eine Zufuhrleitung für Pulverruß 5 und gegebenenfalls eine Zufuhrleitung für vorgeperltes Impfgut 6 münden und an deren gegenüberliegendem stirnseitigen Auslauf 7 das Wehr 2' höhenverstellbar ausgebildet ist.

Erfindungswesentlich ist bei dieser Vorrichtung, daß innerhalb der Trommel 3 im Abstand von deren Innenwand ein Rohr 8 aus gasdurchlässigem Material über Abstandshaltestege bzw. gasdurchlässig ausgebildete Abstandshalteringe 9 an der Trommel 3 unter Bildung eines Hohlraumes 10 befestigt und mit den stirnseitigen Wehren 2,2' gasdicht verbunden ist, wobei der Hohlraum 10 über Rohrstutzen 11 mit einer Quelle für Vakuum bzw. Spülluft in Verbindung steht und durch den vom gasdurchlässigen Rohr 8 umschlossenen Raum eine außerhalb der Trommel 3 gegebenenfalls höhenverstellbar gelagerte Haltestange 12 geführt ist, an der gegebenenfalls ein gegenüber der Haltestange 12 höhenverstellbares Abstreiferblatt 13 (an das Rohr 8 heranführbar) zur Erzielung einer ebenen Oberfläche des angesaugten Rußes angebracht ist.

Die Größe des Volumens des Hohlraums 10 ist an und für sich nicht kritisch. Es hat sich jedoch als günstig erwiesen, wenn das Volumen dieses Hohlraums 10 zwischen Trommel 3 und gasdurchlässigem Rohr 8 etwa 5 - 30, vorzugsweise 10 - 20 % des Trommelvolumens beträgt.

Wie schon erwähnt, muß das gasdurchlässige Rohr 8 gegenüber dem Pulverruß Filterwirkung entfalten, d. h. den Durchtritt von Rußpartikeln in den Hohlraum 10 verhindern. Demgemäß sieht eine vorzugsweise Ausgestaltung der Erfindung vor, daß das gasdurchlässige Rohr 8 aus Sintermetall oder Sinterkunststoff besteht, dessen Porosität entsprechend der zu verperlenden Rußqualität gewählt ist.

Die Vorrichtung wird wie folgt betrieben: Die Trommel wird in Drehung versetzt und der Pulverruß in den stirnseitigen Einlauf kontinuierlich eingespeist. Impfgut wird etwa an derselben Stelle bei Bedarf zugeführt. Gleichzeitig wird der Hohlraum zwischen Trommel und gasdurchlässigem Rohr entsprechend der gewünschten Vorverdichtung mit einem bestimmten Unterdruck beaufschlagt. Das Vakuum kann bei eventuellem Zusetzen der Poren der Filterfläche von Zeit zu Zeit für eine kurze Zeitspanne gebrochen werden bzw. es kann kurzzeitig ein geringfügiger Überdruck angelegt werden. Durch den Druckstoß werden in die Filterfläche eingedrungene Rußpartikel herausgespült und es wird die ursprüngliche Gasdurchlässigkeit wieder hergestellt.

Der durch das Abstreiferblatt fortwährend abgestreifte lose Pulverruß wird der verperlenden Abrollbewegung unterworfen. Der erhaltene Perlruß wird an dem gegenüberliegenden stirnseitigen Auslauf ausgetragen.

Eine weitere neue, kombinierte Vorverdichtungs- und Verperlvorrichtung, die ebenso mit Vorteil zur Durchführung der genannten Verfahrensversion eingesetzt werden kann, besteht darin, daß in eine rotierende Trommel über eine mittig geführte Versorgungsleitung mehrere in Bodennähe befindliche filterartige Hohlelemente eingebaut sind. Durch gezieltes Anlegen von Vakuum und zeitgesteuerte Rückspülung wird ein hoher Vorverdichtungsgrad erzielt, der die gleichzeitige Verperlung ermöglicht.

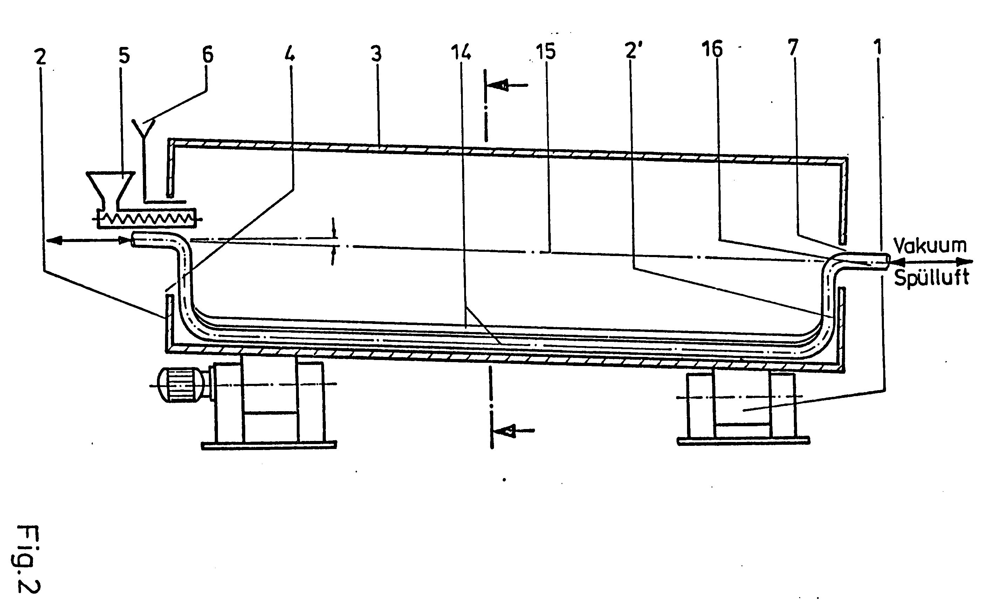

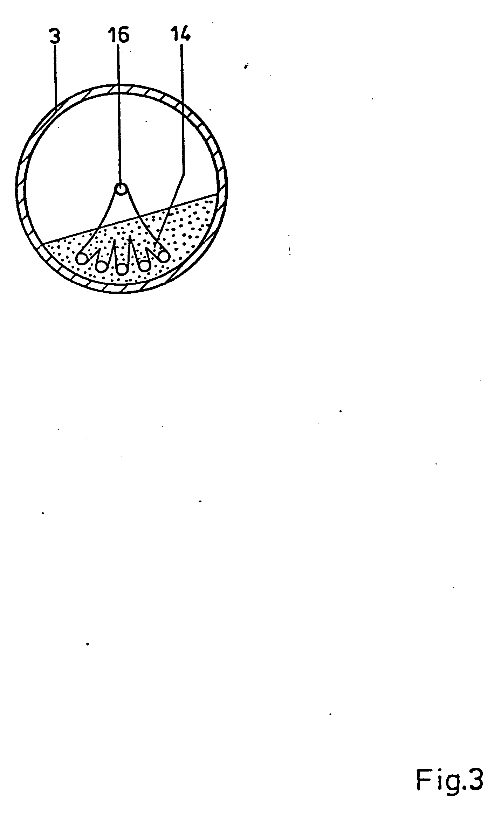

Diese alternative Vorrichtung, von der eine bevorzugte Ausführungsform in Figuren 2 und 3 (= Querschnitt von Figur 2) der anliegenden Zeichnung gezeigt ist, besteht ebenfalls zunächst aus an sich bekannten Elementen, nämlich aus einer mit leichter Neigung zur Horizontalen aufgestellten und mit ihrem Mantel auf angetriebenen Rollen 1 gelagerten, an beiden Stirnseiten mit einem ringförmigen Wehr 2,2′ versehenen Trommel 3, in deren etwas höherliegendem stirnseitigen Einlauf 4 eine Zufuhrleitung für Pulverruß 5 und gegebenenfalls eine Zufuhrleitung für vorgeperltes Impfgut 6 münden und an deren gegenüberliegendem stirnseitigen Auslauf 7 das Wehr 2′ höhenverstellbar ausgebildet ist.

Bei dieser Vorrichtung ist erfindungswesentlich, daß in dem bei rotierender Trommel 3 vom Pulverruß erfüllten unteren Trommelraum im Abstand von der Trommelinnenwand und angepaßt an deren Krümmung, nebeneinander im Abstand angeordnete Hohlelemente 14 aus gasdurchlässigem Material angebracht sind, wobei die Hohlelemente 14 an beiden Stirnseiten der Trommel in jeweils einer zur Mittelachse 15 der Trommel geführten und aus ihr herausführenden und außerhalb derselben entweder drehbar oder fixiert gelagerten Sammelleitung 16 münden, welche mit einer Quelle für Unter- bzw. Überdruck in Verbindung steht.

Der Abstand zwischen den Hohlelementen 14 und der Innenwand der Trommel 3 ist an sich ebensowenig kritisch wie die seitlichen Abstände der Hohlelemente voneinander. Es muß aber gewährleistet sein, daß die Abstände so bemessen werden, daß sich an den Hohlelementen bei Beaufschlagung mit Vakuum Ruß ansammeln kann und die Rollbewegung des Pulverrußes und der daraus entstehenden Rußperlen in diesen Bereichen nicht durch Verstopfungen behindert wird.

Wie erwähnt, müssen auch hier die gasdurchlässigen Hohlelemente 14 gegenüber dem Pulverruß Filterwirkung entfalten. Demgemäß sieht eine vorzugsweise Ausbildung der zuletzt beschriebenen Vorrichtung vor, daß die Hohlelemente 14 Rohre aus Sintermetall, Sinterkeramik oder Sinterkunststoff oder langgestreckte, mit Filtertuch oder Filterschläuchen bespannte Körbe sind.

Von Vorteil kann bei dieser Granuliervorrichtung ferner sein, wenn die Trommel 3 einen Innenabstreifer, z. B. gemäß der in Fig. 1 gezeigten Bauart aufweist.

Der Betrieb der in Figuren 2 und 3 gezeigten Vorrichtung gestaltet sich folgendermaßen: Die Trommel wird in Drehung versetzt und der Pulverruß in den stirnseitigen Einlauf kontinuierlich eingespeist. Bei Bedarf wird etwa an derselben Stelle Impfgut zugeführt. Gleichzeitig wird das Bündel aus "Parallelrohren" über die Sammelleitung entsprechend der gewünschten Vorverdichtung mit einem bestimmten Unterdruck beaufschlagt.

Das Vakuum wird periodisch für eine kurze Zeitspanne gebrochen bzw. es wird ein geringfügiger Überdruck angelegt. Durch den entstehenden Druckstoß löst sich der an der Oberfläche der porösen Hohlelemente angesammelte Ruß und wird der verperlenden Abrollbewegung unterworfen. Der Perlruß wird an dem gegenüberliegenden stirnseitigen Auslauf ausgetragen.

Die beiden erfindungsgemäßen Vorrichtungen gestatten es, in einem einstufigen Verfahren Pulvervorverdichtung und Perlung miteinander zu verbinden. Ihre Anwendbarkeit ist nicht auf die Rußgranulation be-

4

schränkt, sondern erstreckt sich grundsätzlich allgemein auf die Trockenverperlung feinteiliger Pulver mit gegenüber mechanischem Druck empfindlicher Teilchenstruktur.

Mit der Erfindung werden folgende technischen Vorteile erzielt:

1. hohe Energieersparnis,
2. Erzeugung von zusatzfreiem Perlruß mit über den gesamten Querschnitt einer Perle homogenen Dichteverteilung,
3. Möglickeit zur Erzeugung sehr weich geperlter Ruße für spezielle Einsatzgebiete,
4. Erweiterung des Trockenperlverfahrens auf alle Ruße,
5. Kapazitätserhöhung vorhandener Verperleinrichtungen,
6. gezielte Einstellung von Schüttdichte, Einzelperlhärte und mittlerer Perlgröße beliebiger Ruße in Richtung gewünschter Werte.

Die Erfindung wird nachfolgend anhand von Beispielen weiter erläutert.

Beispiel 1

In einem Reaktor nach der deutschen Patentanmeldung 25 30 371.3 wird ein Ruß mit folgenden Grundeigenschaften hergestellt:

| | | | |
|---|---|---|---|
| Jodadsorption | (DIN 53 582) | mg/g | 120 |
| DBP-Absorption | (DIN 53 601) | ml/100 g | 114 |
| elektronenmikroskopische Primärteilchengröße | | nm | 21 |
| Stickstoffoberfläche | (DIN 66 131) | $m^2/g$ | 115 |
| pH-Wert | (DIN 53 200) | | 9,5 |
| Farbstärke bez. auf IRB 3 | (DIN 53 234) | | 109 |

Dieser Ruß wird einmal in Pulverform durch eine Herstellanlage für Furnaceruß geschickt und abgepackt, ohne daß besondere Verdichtungsarbeit an dem Ruß geleistet wird (Ruß A). Zum anderen wird der gleiche Ruß über eine Vakuumverdichtungsanlage geschickt, wie sie z. B. in den deutschen Patentschriften 865 273 / 895 286 beschrieben ist und eine Vorverdichtung durchgeführt (Ruß B).

Der Unterschied der beiden Rußqualitäten macht sich in den Schütt- und Rütteldichten bemerkbar:

| | Schüttdichte | Stampfdichte (DIN 53 194) |
|---|---|---|
| | g/l | g/l |
| Ruß A | 112 | 149 |
| Ruß B (vorverd.) | 160 | 203 |

Zur Testung der Trockenperlfähigkeit dieser beiden Rußqualitäten wird eine Perltrommel mit 400 cm Länge und 60 cm Trommeldurchmesser benutzt.

Die Trommel ist außerdem an der Auslaufseite mit einem Wehr von 16 cm Höhe versehen. Dies bedingt, daß der erzeugte Perlruß so lange in der Perltrommel verbleiben muß, bis er über das Wehr ausläuft. Weiterhin wird die Trommel durch Vorlage von 60 kg fertigem Perlruß für den Perlversuch vorbereitet. Zum Start des Perlversuchs wird die Perltrommel mit 35 UpM in Bewegung gesetzt und mit 5 kg/h Pulverruß kontinuierlich auf der Einlaufseite beschickt. Bei diesen Bedingungen perlt der zugeführte Pulverruß auf und fällt über das Wehr auf der Auslaßseite wieder heraus. Der Perlvorgang wird so lange durchgeführt, bis keine Veränderungen mehr am Perlgut zu erkennen sind. Aus den Pulverrußen A und B entstehen folgende Perlrußqualitäten:

|  | | Ruß A (Vergleichs- versuch) | Ruß B (erfindungsgemäße Arbeitsweise) |
|---|---|---|---|
| Schüttdichte | g/l | 360 | 376 |
| Stampfdichte (DIN 53 194) | g/l | 389 | 401 |
| Einzelperl- härte (DIN Entwurf 53 603) | g | 0,40 | 0,64 |

Siebanalyse

|  |  |  | Ruß A | Ruß B |
|---|---|---|---|---|
| < 0,125 | mm | % | 1,1 | 1,6 |
| 0,125 - 0,25 | mm | % | 16,1 | 34,8 |
| 0,25 - 0,5 | mm | % | 54,6 | 36,4 |
| 0,5 - 0,71 | mm | % | 20,4 | 21,0 |
| 0,71 - 1,0 | mm | % | 5,0 | 5,0 |
| >1,0 | mm | % | 2,7 | 1,2 |
| mittlere Perlgröße | mm | | 0,45 | 0,40 |

Mit der erfindungsgemäßen Arbeitsweise wird also bei vollkommen identischen Trockenperlbedingungen ein Ruß mit höherer Schüttdichte, höherer Rütteldichte und höherer Perlhärte sowie einer verringerten mittleren Perlgröße erzeugt.

Beispiel 2

Um die Wirksamkeit des erfindungsgemäßen Verfahrens noch deutlicher herauszustellen, wurden wieder die Ruße A und B aus Beispiel 1 verwendet. Auch die gleiche Trockenperltrommel mit 400 cm Länge und 60 cm Durchmesser wurde eingesetzt. Im Gegensatz zu Beispiel 1 wurde jedoch die Wehrhöhe an der Austragsseite der Trockenperltrommel auf 8 cm herabgesetzt. Außerdem wurde kein Perlruß vorgelegt.

Dann wurde die Perltrommel mit einer Drehzahl von 35 UpM gestartet und auf der Eintragsseite 5 kg/h Pulverruß kontinuierlich eingetragen. Der Eintrag wurde wieder so lange fortgeführt, bis keine Änderung in der Qualität des über das Wehr ausgetragenen Rußes mehr erfolgte.

| | | Ruß A (Vergleichs- versuch) | Ruß B (erfindungsgemäße Arbeitsweise) |
|---|---|---|---|
| Erscheinungsbild | | Staub | Perlen |
| Schüttdichte | g/l | 192 | 320 |
| Stampfdichte (DIN 53 194) | g/l | 241 | 347 |
| Einzelperlhärte (DIN Entwurf 53 603) | g | – | 0,28 |

Siebanalyse

| | | | | | | | Ruß A | Ruß B |
|---|---|---|---|---|---|---|---|---|
| | | < | 0,125 | mm | % | | – | 4,0 |
| 0,125 | mm | – | 0,25 | mm | % | | – | 34,4 |
| 0,25 | mm | – | 0,5 | mm | % | | – | 48,0 |
| 0,5 | mm | – | 0,71 | mm | % | | – | 10,0 |
| 0,71 | mm | – | 1,0 | mm | % | | – | 2,0 |
| | | > | 1,0 | mm | % | | – | 1,6 |
| mittlere Perlgröße | | | | mm | | | – | 0,36 |

Die Wirksamkeit des erfindungsgemäßen Verfahrens zeigt sich wie folgt: Während bei Ruß A die Trockenverperlung überhaupt nicht anspringt und nur Staub die Perltrommel verläßt, kann mit Ruß B unter vollkommen gleichen Perlbedingungen eine gut brauchbare Trockenperle hergestellt werden. Bei Verwendung von Ruß B verläßt ein vollkommen staubfreier Perlruß die Perltrommel.

Beispiel 3

In einer Trockenperltrommel (Länge 14.500 mm, Durchmesser 2.400 mm, Wehrhöhe max. 520 mm) wurden bei einer Wehrhöhe von 265 mm und 16 UpM ca.1,2 t/h Ruß N326 verperlt. Der eingegebene Pulverruß hatte ein Schüttgewicht von ca. 80 g/l. Eine Durchsatzerhöhung auf 1,4 t/h führte zum Zusammenbruch des Verperlvorgangs. Wird die Durchsatzerhöhung jedoch unter Verwendung von vorverdichtetem Material (ca. 200 g/l) vorgenommen, so wird die Granulierkapazität auf 2,6 t/h erhöht.

**Patentansprüche**

1. Verfahren zum Trockenverperlen von Pulverruß nach dem Prinzip der Aufbaugranulierung unter Beeinflussung der Perlqualität und Erhöhung des Durchsatzes einer Verperleinrichtung durch Vorverdichten des zu perlenden Ausgangsrußes und Verperlung durch einen Rollvorgang,
   **dadurch gekennzeichnet,**
   daß man den Ausgangsruß unter Erhaltung seiner Pulverform durch Absaugung mittels vakuumbeaufschlagter rotierender oder stationärer Filterflächen auf ein Schüttgewicht von 80 - 300 g/l, vorzugsweise 100 - 250, insbesondere 130- 220 g/l, vorverdichtet.

2. Verfahren nach Anspruch 1,
   **dadurch gekennzeichnet,**
   daß man die Vorverdichtung mittels Vakuumfilterwalze vornimmt.

**3.** Verfahren nach Anspruch 1 oder 2,
**dadurch gekennzeichnet,**
daß man die Verperlung in einer Perltrommel oder auf einem Tellergranulator vornimmt.

**4.** Verfahren nach den Ansprüchen 1 bis 3,
**dadurch gekennzeichnet,**
daß man das Ausgangsmaterial während der Verperlung in einer Perltrommel durch Anlegen von Unterdruck an den als Filterfläche ausgebildeten Trommelmantel oder an stationär in der Trommel angeordnete Filterelemente vorverdichtet.

**5.** Vorrichtung zur Durchführung des Verfahrens nach Anspruch 4, bestehend aus einer mit leichter Neigung zur Horizontalen aufgestellten und mit ihrem Mantel auf angetriebenen Rollen (1) gelagerten, an beiden Stirnseiten mit einem ringförmigen Wehr (2,2') versehenen Trommel (3), in deren etwas höherliegendem stirnseitigen Einlauf (4) eine Zufuhrleitung für Pulverruß (5) und gegebenenfalls eine Zufuhrleitung für vorgeperltes Impfgut (6) münden und an deren gegenüberliegendem stirnseitigen Auslauf (7) das Wehr (2') höhenverstellbar ausgebildet ist,
**dadurch gekennzeichnet,**
daß innerhalb der Trommel (3) im Abstand von deren Innenwand ein Rohr (8) aus gasdurchlässigem Material über Abstandshaltestege bzw. gasdurchlässig ausgebildete Abstandshalteringe (9) an der Trommel (3) unter Bildung eines Hohlraumes (10) befestigt und mit den stirnseitigen Wehren (2,2') gasdicht verbunden ist, wobei der Hohlraum (10) über Rohrstutzen (11) mit einer Quelle für Vakuum bzw. Spülluft in Verbindung steht und durch den vom gasdurchlässigen Rohr (8) umschlossenen Raum eine außerhalb der Trommel (3) gegebenenfalls höhenverstellbar gelagerte Haltestange (12) geführt ist, an der gegebenenfalls ein gegenüber der Haltestange (12) höhenverstellbares Abstreiferblatt (13) (an das Rohr 8 heranführbar) zur Erzielung einer ebenen Oberfläche des angesaugten Rußes angebracht ist

**6.** Vorrichtung nach Anspruch 5,
**dadurch gekennzeichnet,**
daß das Volumen des Hohlraumes (10) zwischen Trommel (3) und gasdurchlässigem Rohr (8) etwa 5 - 30, vorzugsweise 10 - 20 % des Trommelvolumens beträgt.

**7.** Vorrichtung nach Anspruch 5 oder 6,
**dadurch gekennzeichnet,**
daß das gasdurchlässige Rohr (8) aus Sintermetall oder Sinterkunststoff besteht, dessen Porosität entsprechend der zu verperlenden Rußqualität gewählt ist.

**8.** Vorrichtung zur Durchführung des Verfahrens nach Anspruch 4, bestehend aus einer mit leichter Neigung zur Horizontalen aufgestellten und mit ihrem Mantel auf angetriebenen Rollen (1) gelagerten, an beiden Stirnseiten mit einem ringförmigen Wehr (2,2') versehenen Trommel (3), in deren etwas höherliegendem stirnseitigen Einlauf (4) eine Zufuhrleitung für Pulverruß (5) und gegebenenfalls eine Zufuhrleitung für vorgeperltes Impfgut (6) münden und an deren gegenüberliegendem stirnseitigen Auslauf (7) das Wehr (2') höhenverstellbar ausgebildet ist,
**dadurch gekennzeichnet,**
daß in dem bei rotierender Trommel (3) vom Pulverruß erfüllten unteren Trommelraum im Abstand von der Trommelinnenwand und angepaßt an deren Krümmung nebeneinander im Abstand angeordnete Hohlelemente (14) aus gasdurchlässigem Material angebracht sind, wobei die Hohlelemente (14) an beiden Stirnseiten der Trommel in jeweils einer zur Mittelachse (15) der Trommel geführten und aus ihr herausführenden und außerhalb derselben entweder drehbar oder fixiert gelagerten Sammelleitung (16) münden, welche mit einer Quelle für Unter- bzw. Überdruck in Verbindung steht.

**9.** Vorrichtung nach Anspruch 8,
**dadurch gekennzeichnet,**
daß die Hohlelemente (14) Rohre aus Sintermetall, Sinterkeramik oder Sinterkunststoff oder langgestreckte, mit Filtertuch oder Filterschläuchen bespannte Körbe sind.

**10.** Vorrichtung nach Anspruch 8 oder 9,
**dadurch gekennzeichnet,**
daß die Trommel (3) einen Innenabstreifer besitzt.

**Claims**

1. A process for dry pelletizing powder black by the principle of build-up granulation in which the quality of the pellets is influenced and the output of a pelleting device is increased by precompacting of the carbon black which is to be pelletized and pelletizing is carried out by a rolling process, characterised in that the carbon black used as starting material is precompacted to a bulk weight of 80 - 300 g/l, preferably 100 - 250 g/l, especially 130 - 220 g/l, by suction by means of rotating or stationary filter surfaces which are under a vacuum, while the powder form of the carbon black is preserved.

2. A process according to Claim 1, characterised in that the precompacting is carried out by means of a vacuum filter roller.

3. A process according to Claim 1 or Claim 2, characterised in that pelleting is carried out in a pelletizing drum or a granulating plate.

4. A process according to Claims 1 to 3, characterised in that the starting material is precompacted during the pelletization in a pelletizing drum by the application of a vacuum to the drum shell used as filter surface or to filter elements which are arranged to be stationary inside the drum.

5. Apparatus for carrying out the process according to Claim 4, consisting of a drum (3) which is placed at a slight inclination to the horizontal and mounted with its shell on driven rollers (1) and provided with an annular weir (2,2) at both its end faces, a supply pipe for powder black (5) and optionally a supply pipe for prepelletised inoculation material (6) opening into the drum's inlet end (4), which is situated at a slightly higher level than the opposite end, and the weir (2') which is situated at the opposite or outflow end (7) being adjustable in height, characterised in that inside the drum (3), at a distance from its internal wall, a pipe (8) of gas permeable material is fixed to the drum (3) by spacer webs or gas permeable spacer and supporting rings (9) to form a cavity (10), which pipe (8) is gas-tightly connected to the end face weirs (2,2'), the cavity (10) communicating via pipe connections (11) with a source of vacuum or scavenging air, and a supporting rod (12) mounted outside the drum (3) and optionally adjustable in height extending through the space enclosed by the gas permeable pipe (8), on which rod (12) is optionally mounted a stripper sheet (13) which is adjustable in height relative to the supporting rod (12) (and can be moved towards the pipe (8) ) for obtaining an even surface on the carbon black which has been placed in position by suction.

6. Apparatus according to Claim 5, characterised in that the volume of the cavity (10) between the drum (3) and the gas permeable pipe (8) amounts to about 5 to 30%, preferably 10 to 20% of the volume of the drum.

7. Apparatus according to Claim 5 or 6, characterised in that the gas permeable pipe (8) is made of a sintered metal or sintered synthetic resin whose porosity is chosen according to the quality of the carbon black which is to be pelletized.

8. Apparatus for carrying out the process according to Claim 4 consisting of a drum (3) arranged at a slight inclination to the horizontal and mounted by its shell on driven rollers (1) and having an annular weir (2,2') at both its end faces, a supply pipe for powder black (5) and optionally a supply pipe for prepelletised inoculation material (6) opening into the drum's inlet end face (4), which is situated at a slightly higher level than the opposite end, and the weir (2') situated at the outflow at the opposite end face being adjustable in height, characterised in that in the lower drum space, which is filled with powder black when the drum (3) rotates, hollow elements (14) of gas permeable material are arranged side by side and spaced apart at some distance from the internal wall of the drum and adapted to its curvature, the hollow elements (14) opening into a collecting duct (16) at both end faces of the drum, which collecting duct extends to the central axis (15) of the drum and out of the drum and is mounted outside the drum to be either rotatable or fixed and communicates with a source of vacuum or excess pressure.

9. An apparatus according to Claim 8, characterised in that the hollow elements (14) are pipes of sintered metal, sintered ceramics or sintered synthetic resin or elongated baskets covered with filter cloth or filter tubes.

10. An apparatus according to Claim 8 or 9, characterised in that the drum (3) has an internal stripper.

9

## Revendications

1°) Procédé de fabrication à sec de perles de noir de carbone en poudre selon le principe de la granulation de structure par influence sur la qualité des perles et augmentation du débit d'un dispositif de production de perles par précompression du noir de carbone d'origine destiné à produite des perles et production de perles par un mécanisme à galets, caractérisé en ce qu'on comprime le noir de carbone d'origine en maintenant sa forme pulvérulente par aspiration provoquée par des surfaces filtrantes sous vide, tournantes ou stationnaires avec une densité en vrac comprise entre 80 et 300 g/l, de préférence entre 100 et 250 g/l, en particulier entre 130et 220 g/l.

2°) Procédé selon la revendication 1, caractérisé en ce qu'on réalise la précompression au moyen d'un cylindre filtrant sous vide.

3°) Procédé selon une des revendications 1 ou 2, caractérisé en ce qu'on entreprend la production de perles dans un tambour pour perles ou sur un granulateur à disques.

4°) Procédé selon les revendications 1 à 3, caractérisé en ce qu'on précomprime le matériau d'origine pendant la production de perles dans un tambour pour perles par application du vide à l'enveloppe du tambour réalisée en surface filtrante ou à des éléments filtrants disposés de façon fixe dans le tambour.

5°) Dispositif pour la mise en oeuvre du procédé selon la revendication 4, se composant d'un tambour (3), disposé légèrement incliné sur l'horizontale, reposant par son enveloppe sur des galets moteurs (1), muni sur ses deux faces frontales d'une barrière annulaire (2, 2'), un peu au dessus de laquelle du côté de l'entrée (4) frontale du tambour débouchent une conduite d'amenée du noir de carbone en poudre (5) et éventuellement une autre conduite d'amenée de matière d'inoculation (6) préperlée et du côté frontal de sortie (7), à l'opposé du tambour, la barrière (2') est réalisée réglable en hauteur, caractérisé en ce qu'à l'intérieur du tambour (3) à une certaine distance de sa paroi intérieure, un tube (8) en matériau perméable aux gaz est fixé au tambour par des étriers de maintien ou des anneaux de maintien à intervalle (9) réalisés perméables aux gaz, pour former un espace creux (10) et il est relié aux barrières frontales (2, 2') de façon étanche aux gaz, l'espace creux (10) étant en communication par des ajutages (11) avec une source de vide ou de l'air de balayage et une barre de support (12) éventuellement réglable en hauteur, supportée à l'extérieur du tambour (3) étant introduite dans l'espace entouré par le tube (8) perméable aux gaz, barre à laquelle est appliquée éventuellement une lame racleuse (13) réglable en hauteur vis-à-vis de la barre de support (12) (en approchant du tube 8) pour l'obtention d'une surface plane du noir de carbone aspiré.

6°) Dispositif selon la revendication 5, caractérisé en ce que le volume de l'espace creux (10) entre le tambour (3) et le tube (8) perméable aux gaz correspond à environ 5 - 30 % de préférence 10 - 20 % du volume du tambour.

7°) Dispositif selon les revendications 5 ou 6, caractérisé en ce que le tube (8) perméable aux gaz est composé de métal fritté ou de matière artificielle frittée dont la porosité est choisie en correspondance de la qualité de noir de carbone à produire en perles.

8°) Dispositif pour la mise en oeuvre du procédé selon la revendication 4 se composant d'un tambour (3) installé en faible pente par rapport à l'horizontale, reposant par son enveloppe sur des galets (1) moteurs, muni sur ses deux faces frontales d'une barrière annulaire (2, 2'), un peu au dessus de laquelle du côté de l'entrée (4) frontale du tambour débouche une conduite d'amenée du noir de carbone en poudre (5) et éventuellement une autre conduite d'amenée de matière d'inoculation préperlée (6) et du côté frontal de sortie (7), à l'opposé du tambour, la barrière (2') est réalisée réglable en hauteur, caractérisé en ce que dans l'espace inférieur du tambour rempli de noir de carbone en poudre pendant la rotation du tambour (3), sont mis en place des éléments creux (14) en matériau perméable aux gaz disposés à une certaine distance de la paroi intérieure du tambour et espacés les uns des autres en suivant la courbure de celui-ci, les éléments creux (14) débouchant aux deux extrémités frontales du tambour respectivement dans une conduite collectrice dirigée suivant l'axe central (15) du tambour, sortant de celui-ci et supportée à l'extérieur du tambour, soit mobile en rotation, soit fixe, cette conduite étant en communication avec une source de vide ou de surpression.

9°) Dispositif selon la revendication 8, caractérisé en ce que les éléments creux (14) sont des tubes en métal fritté, céramique frittée ou matière synthétique frittée ou bien des paniers très allongés, recouverts de tissus filtrant ou de sacs filtrants.

10°) Dispositif selon la revendication 8 ou 9, caractérisé en ce que le tambour (3) possède un racloir intérieur.

Fig.1

Vakuum
Spülluft

EP 0 360 236 B1

Fig.2

Fig.3